# EUROPEAN PATENT APPLICATION

(11) **EP 4 572 184 A1**
(43) Date of publication of application: **18.06.2025**
(21) Application number: 23307185.1
(22) Date of filing: 12.12.2023
(51) Int. Cl.: H04B 10/118, H04B 10/516, H04B 10/61, H04L 1/00

(54) **FREE SPACE OPTICAL COMMUNICATION SYSTEMS**

(71) Applicant: Nokia Solutions and Networks Oy, 02610 Espoo (FI)
(72) Inventor: BODDEDA, Rajiv, 91300 Massy (FR); RENAUDIER, Jérémie, 91190 Gif-sur-Yvette (FR)
(74) Representative: Novagraaf Technologies

(57) **Abstract**

A digital signal processor (DSP) for encoding an original stream of protocol data units (PDUs) into one or more encoded streams of PDUs to be transmitted via a free space optical link, wherein the DSP is configured to generate the one or more encoded streams of PDUs from the original stream of PDUs by forward error correction (FEC) encoding and interleaving.

## Description

### TECHNICAL FIELD

Various example embodiments relate generally to a digital signal processor (DSP) for encoding an original stream of protocol data units (PDUs), a digital signal processor (DSP) for decoding encoded streams of protocol data units (PDUs), a codec device for free space optical communication.

### BACKGROUND

Optical satellite communications via free space provide high-capacity data links in low-density populated areas that can be used to establish non-permanent data links for example for industries or military operations or can provide seamless connectivity when terrestrial networks are shut down.

However optical signals propagating through the atmosphere from/towards a satellite are impacted by atmospheric turbulence. Air turbulence randomly modifies (spatially and temporally) the optical beam profile and may cause spatio-temporal phase and amplitude variations of the optical beam. In a ground-satellite optical link, this creates received optical power fluctuations when coupling the optical beam into the receiver fiber, at the input of the satellite or ground station telescope.

Thus, the signal power available for data demodulation randomly varies in time and may fall below a minimum value required for quasi error free transmission, even when sophisticated error correction engines are used. Thus, due to the presence of atmospheric turbulence, the availability of such a free space optical links is largely limited.

### SUMMARY

The scope of protection is set out by the independent claims. The embodiments, examples, and features, if any, described in this specification that do not fall under the scope of the protection are to be interpreted as examples useful for understanding the various embodiments or examples that fall under the scope of protection.

According to a first aspect, a digital signal processor (DSP) for encoding an original stream of protocol data units (PDUs) into one or more encoded streams of PDUs to be transmitted via a free space optical link is disclosed. The DSP is configured to generate the one or more encoded streams of PDUs from the original stream of PDUs by forward error correction (FEC) encoding and interleaving.

The DSP according to the first aspect may comprise: a FEC encoder configured to generate a stream of FEC codewords by FEC encoding of the original stream of PDUs; a splitter configured to split the stream of FEC codewords into one or more streams of data blocks; one or more interleavers configured to generate one or more reordered streams of data blocks from the one or more streams of data blocks; and one or more framers configured to generate the one or more encoded streams of PDUs from the one or more reordered streams of data blocks, each PDU of the one or more encoded streams of PDUs comprising one or more data blocks of the one or more reordered streams of data blocks.

Each of the one or more interleavers may be configured to generate a reordered stream of data blocks from a stream of data blocks by interleaving a plurality of substreams of the stream of data blocks with each other, thereby separating two or more successive data blocks of a substream of data blocks from each other in time by a period of at least 10 milliseconds.

Interleaving the plurality of substreams with each other may comprise: adding an interleaver address to each data block of each substream of the plurality of substreams.

The interleaver address may be FEC-encoded.

The PDUs of the original stream and the PDUs of the one or more encoded streams of PDUs may be frames or packets in a layer higher than the physical layer of an Open Systems Interconnection (OSI) model.

The PDUs of the original stream of PDUs and the PDUs of the one or more encoded streams of PDUs may be one of the following: Ethernet frames; Optical Transport Network (OTN) packets; or Internet Protocol (IP) packets.

The PDUs of the original stream of PDUs and the PDUs of the one or more encoded streams of PDUs may be implemented in a same layer of an Open Systems Interconnection (OSI) model.

Each PDU of the one or more encoded streams of PDUs may comprise control information and payload data, wherein the payload data comprises a forward error correction (FEC) codeword and at least one interleaver address.

Each FEC codeword of the stream of FEC codewords may comprise: bits extracted from the original stream of PDUs and a plurality of redundant bits.

The FEC encoding may comprise FEC encoding for correction of erasure-type errors.

The DSP according to the first aspect may comprise one or more output ports for providing the one or more encoded streams of PDUs, wherein the one or more output ports may be connected or connectable to an optical transmitter.

According to another aspect, an optical transmitter device is disclosed. The optical transmitter device may include the DSP according to the first aspect, a physical layer interface, and an optical transmitter. The physical layer interface may be configured to generate, from each respective stream of the one or more encoded streams of PDUs, a respective stream of symbols and to drive the optical transmitter in accordance with the stream of symbols.

Generating the respective stream of symbols may comprise adding forward error correction information at the physical layer.

According to a second aspect, a digital signal processor (DSP) for decoding one or more streams of protocol data units (PDUs) received via a free space optical link into a decoded stream of PDUs is disclosed. The DSP is configured to generate the decoded stream of PDUs from the one or more streams of PDUs by de-interleaving and forward error correction (FEC) decoding.

The DSP according to the second aspect may comprise: one or more unframers configured to generate one or more reordered streams of data blocks from the one or more streams of PDUs, by extracting one or more data blocks from each PDU of at least some PDUs of the one or more streams of PDUs; one or more de-interleavers configured to generate one or more streams of data blocks from the one or more reordered streams of data blocks; a combiner configured to combine the one or more streams of data blocks into a stream of FEC codewords; and an FEC decoder configured to generate the decoded stream of PDUs by FEC decoding of the stream of FEC codewords.

The DSP according to the second aspect may comprise one or more input ports for receiving the one or more streams of PDUs, wherein the one or more input ports are connected or connectable to an optical receiver.

According to another aspect, a codec device for free space optical communication is disclosed. The codec device may comprise an DSP according to the first aspect (e.g., encoding DSP) and an DSP according to the second aspect (e.g., the decoding DSP).

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 shows a transmission system according to a first embodiment.
FIG. 2 shows a transmission system according to a second embodiment.
FIG. 3 shows a transmission system according to a third embodiment.
FIG. 4 shows a transmission system according to a fourth embodiment.
FIG. 5 shows functional blocks of an encoding DSP according to an example.
FIG. 6 shows functional blocks of a decoding DSP according to an example.
FIG. 7 illustrates an interleaving scheme according to a simplified example.
FIG. 8 is a schematic diagram illustrating aspects of an interleaver according to an example.
FIG. 9 is a flowchart illustrating a method according to an example.
FIG. 10 is a flowchart illustrating a method according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In principle, interruptions and errors produced by atmospheric turbulences may be overcome by implementing integrated symbol/bit interleaving with long times (several milliseconds) at physical level, but this implementation would be highly challenging as it would be resource intensive. In addition, existing memories (DDR4 and DDR5) for performing interleaving are severely limited (maximum bandwidth of 200 Gbps per bus) in terms achievable transfer rates, rendering coherent transmission systems operating at more than 33 Gbaud (with sampling rates higher than 6 bits per symbol) infeasible.

These limitations may be overcome by decoupling the interleaving from the usual transmission chain and performing FEC and interleaving at a layer above the physical layer.

Embodiments relate, on transmission side, to a digital signal processor (DSP) (hereafter the encoding DSP) for encoding an original stream of protocol data units (PDUs) into one or more encoded streams of PDUs to be transmitted via a free space optical link. The DSP is configured to generate the one or more encoded streams of PDUs from the original stream of PDUs by forward error correction (FEC) encoding and interleaving. FEC is performed here at a layer above the physical layer, e.g., at "application level", "client layer" or "PDU level".

Free space optical links relate to links that do not use an optical wave guide (such as an optical fiber). Free space optical links include links through space and through the Earth's atmosphere for example.

In embodiments, the encoding DSP includes one or more ports (e.g., output ports) for providing respectively the one or more encoded streams of PDUs to an optical transmitter adapted to generate an optical signal for transmission via a free space optical link.

The encoding DSP may be connectable to or be connected to or be part of an optical transmitter device including an optical transmitter. For example, the one or more ports of the encoding DSP may be connected or connectable to the optical transmitter. For example, the optical transmitter device includes or is connected to the encoding DSP.

The optical transmitter may be configured to generate, e.g., by use of a modulation scheme, an output optical signal from one or more streams of PDUs encoded by the encoding DSP.

The optical transmitter device may include a physical layer interface, the physical layer interface being configured to generate, from each stream of PDUs, a respective stream of symbols and to drive the optical transmitter in accordance with the stream of symbols to generate an optical signal to be transmitted via free space.

Generating a stream of symbols may comprise adding forward error correction information at the physical layer, such that FEC is performed at two levels: at the physical layer by the optical transmitter / receiver and at application layer, above the physical layer, by the DSP connected to the optical transmitter / receiver.

The FEC at client level may be a Hard Decision FEC (HD-FEC), e.g. the decision rules by the decoding DSP at receiver side are based on two levels (1 and 0). The FEC at physical level may be a Soft Decision FEC (SD FEC) that gives a confidence factor in the decision used by receiver to decide between 1 and 0.

Embodiments relate, on reception side, to a DSP (here after the decoding DSP) for decoding one or more streams of PDUs received via a free space optical link into a decoded stream of PDUs. Ideally, the decoded stream of PDUs will be an exact replica of the original stream of PDUs encoded by the encoding DSP on transmission side. The decoding DSP is configured to generate the decoded stream of PDUs from the one or more received streams of PDUs by de-interleaving and forward error correction (FEC) decoding.

The decoding DSP may include one or more ports (e.g., input ports) for receiving the one or more streams of PDUs, wherein the one or more input ports are connected or connectable to an optical receiver. The optical receiver is adapted for generating a stream of PDUs from an optical signal transmitted via a free space optical link.

The decoding DSP may be connectable to or be connected to or be part of an optical receiver device including an optical receiver. For example, the one or more ports of the decoding DSP may be connected or connectable to the optical receiver. For example, the optical receiver device includes or is connected to the decoding DSP.

The optical receiver may be configured to demodulate an input optical signal to generate one or more streams of PDUs to be decoded by the decoding DSP.

The decoding DSP on reception side and the encoding DSP on transmission side may be included in a codec device or an optical transceiver device adapted for free space optical communication.

One objective is to make the user transparent to interruptions induced by the atmospheric turbulence. The FEC may correct the errors which are more sparsely distributed after de-interleaving. The encoding DSP acts as a buffer thanks to the interleaver, and the interruptions may be overcome by using a FEC acting over longer timescales than at bit level. Since, the interleaving is performed outside the optical transmitter, using the client data, at client or application layer.

Even for interleaver times as large as 200 ms the required memory is readily available in commercial cards.

The encoding (respectively decoding) DSP may be implemented by circuitry adapted to perform the functions defined herein for the encoding (respectively decoding) DSP. The encoding (respectively decoding) DSP may be implemented using a standard off the shelf FPGA modules with an integrated memory.

The encoding (respectively decoding) DSP may be implemented as an add-on card or plug-in card that may be connected to an existing optical transmitter (respectively receiver). Alternatively, the encoding (respectively decoding) DSP or may be integrated into an optical transmitter (respectively receiver) device.

Such add-on card may be plugged on to electrical inputs/outputs of existing optical data transceivers, including an optical data receiver and an optical data transmitter 160. There may be one add-on card for receiver side and another physically distinct add-on card for the transmitter side or alternatively a single add-on card 100A for implementing the functions at receiver and transmitter side.

The encoding (respectively decoding) DSP may accept various PDU types: PDUs according to standard protocols such as Ethernet, OTN, IP, etc and perform interleaving with forward error correction at client level, using the client data, instead of using a large integrated interleaver at symbol/bit level.

The transmission and the receiver architectures are based on coherent optical transmission chains designed for terrestrial systems and hence transmitting standard protocols such as Ethernet, IP or OTN. The generated optical signal may be amplified using a high-power amplifier before being emitted using an optical telescope (Transmitter Telescope). The signal is transmitted through the free space channel, where due to atmospheric turbulence the received power intermittently goes below the decoding capabilities of the receiver even after pre-amplification known as fadings. These fadings will lead to interruptions in information transmitted. Sometimes these interruptions can last longer than the power interruptions, but these times can be reduced by optimizing the coherent receiver chain (for e.g., by reducing the coherent dispersion correction capabilities in the DSP chain as free space transmission doesn't exhibit significant chromatic dispersion).

The encoding DSP may accept an input stream of PDUS at a high speed (for generating e.g., 100 GE high speed optical link), and performs high-level encoding to add redundancy to the input stream of PDUs (may go up to 100% of redundancy). The FEC (e.g. HD-FEC) essentially adds redundancy and increases the data rate before the interleaving is performed.

The decoding DSP performs a corresponding de-interleaving at optical transmitter side and a corresponding FEC decoding (e.g., HD-FEC).

The delay introduced by the interleaver may be in the order of few milliseconds, e.g., may be greater than 10 milliseconds.

Different embodiments may be designed to transmit data through multiple nodes via free space link between an optical transmitter and an optical receiver and the encoding and/or decoding DSPs are not necessarily plugged close to the free space optical transmitter or receiver. Hence, these encoding and/or decoding DSPs may be connected away from the optical transmitter and/or the optical receiver (e.g., away from optical ground station or even the satellite) if necessary to reduce the on-board processing overhead.

As the future optical links demand speeds close to 100 Gbps, the example embodiments are based on such targets, but the embodiments are likewise applicable to any other data rates.

The advantage of this technique is that the data is always transported in the same protocol and without any format change making it compatible to integrate into any transmission system.

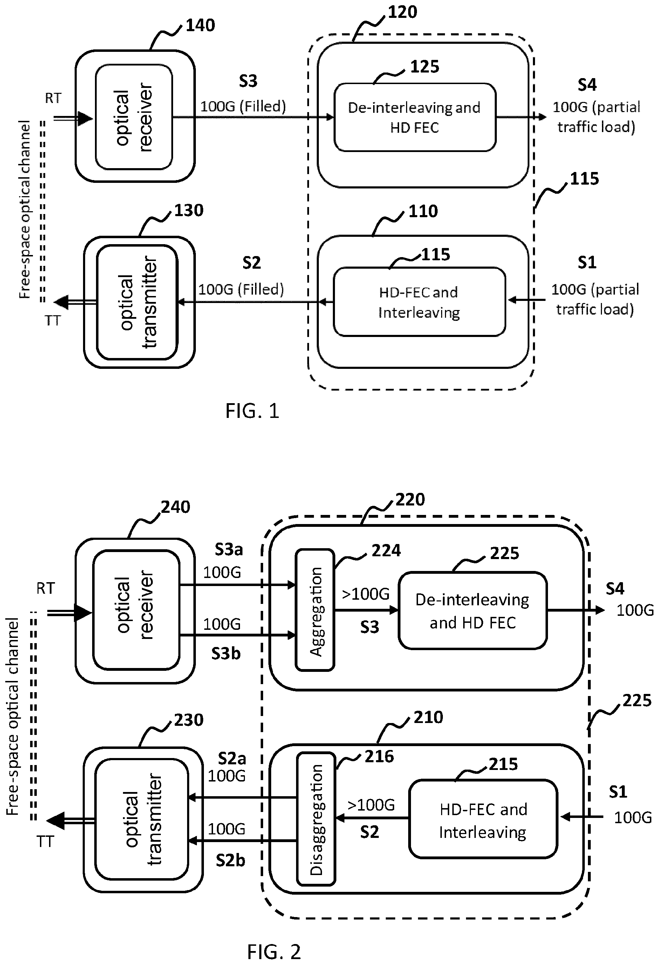

FIG. 1 shows a transmission system 100 according to a first embodiment.

On transmission side, the transmission system includes a DSP 110 which encodes and interleaves (HD FEC and de-interleaving block 115) an original stream S1 of PDUs to generate an encoded S2 stream of PDUs. The transmission system includes an optical transmitter 130 adapted to generate an optical signal TT from encoded stream S2 of PDUs. The optical signal TT is transmitted through a free space optical channel, e.g., without modifying the protocol for transmission.

On reception side, the transmission system includes an optical receiver 140 generating a stream S3 of PDUs from a received optical signal RT. The transmission system includes a DSP 120 which decodes and de-interleaves (HD FEC and de-interleaving block 125) the stream S3 of PDUs to generate a decoded S4 stream of PDUs.

The encoding DSP 110 may be implemented as an add-on card adapted to be plugged to an optical transmitter 130 or may be integrated in an optical transmitter device.

Likewise, the decoding DSP 120 may be implemented as an add-on card adapted to be plugged to an optical receiver 140 or may be integrated in an optical transmitter device.

The two DSPs 110 and 120 may be implemented as separate add-on cards or be part of a single add-on card 115 (e.g., a codec device).

The single add-on card 115 may be adapted to be plugged to an optical transceiver adapted for optical reception and transmission.

In the first embodiment, the transmission system is designed to accept traffic loads lower than 100%. For e.g., the transmission system may only accept partially loaded traffic (e.g., -50% using a 100 GE protocol with a data rate of 100 Gbits/s). FEC encoding will add redundancy to the original stream of PDUs such that at the output of the DSP 110 the maximum data rate (in the above example it corresponds to 100 Gbits/s) may be reached by the encoded stream of PDUs.

FIG. 2 shows a transmission system according to a second embodiment.

In this second embodiment, the transmission system uses a single wavelength to transmit dis-aggregated separate encoded streams of PDUS which are interleaved and FEC encoded by DSP 210.

On transmission side, the transmission system includes a DSP 210 which encodes and interleaves (by HD FEC encoding and interleaving block 215) an original stream S1 of PDUs to generate an encoded S2 stream of PDUs.

A disaggregation block 216 may be used to disaggregate and separate the encoded stream S2 of PDUs into two or more encoded streams S2a, S2b of PDUs (here in the FIG. 2, two encoded streams S2a, S2b of PDUs) at the same rate Gbits/s, for example by encapsulating the encoded streams S2a, S2b of PDUS using a standard transmission protocol (e.g., 100 Gigabit Ethernet, 100GE), each encoded stream S2a, S2b of PDUS having a fixed data rate.

The conversion may be performed using protocols such as AMP, where a lower rate incoming data is mapped onto a fixed rate outgoing data. After encoding and interleaving, the data rate S2 (for e.g., <200G) is mapped to S2a and S2b (e.g., 100G each).

In the second embodiment, irrespective of the input traffic load, each transmitted encoded stream S2a, S2b is always at full capacity (>100Gbps).

On transmission side, the transmission system includes an optical transmitter 230 that generates an optical signal TT from the encoded streams S2a, S2b. The optical signal TT is transmitted through a free space optical channel, without modifying the protocol for transmission.

These encoded streams S2a, S2b can be transported via free space, after conversion to an optical signal using a single wavelength by an optical transmitter 230, using a typical high-speed coherent module.

At receiver side, the transmission system includes an optical receiver 240 generating streams S3a, S3b of PDUs from a received optical signal RT. A second DSP 220 aggregates (by aggregation block 224) the streams S3a, S3b of PDUs into a single stream S3 of PDUs (>100Gbps). The stream S3 of PDUs is de-interleaved and FEC decoded (by HD FEC encoding and interleaving block 225) such that the interruptions due to fadings are sparsely distributed to aid the FEC correction capabilities. At the output, the decoded stream S4 should be devoid of interruptions at the cost of latency added due to the interleaver.

The encoding DSP 210 may be implemented as an add-on card adapted to be plugged to the optical transmitter 230 or may be integrated in an optical transmitter device including the optical transmitter 230.

Likewise, the decoding DSP 220 may be implemented as an add-on card adapted to be plugged to an optical receiver 240 or may be integrated in an optical receiver device including the optical receiver 240.

The two DSPs 210 and 220 may be implemented as separate add-on cards or be part of a single add-on card 225 (e.g., a codec device).

The single add-on card 225 may be adapted to be plugged to an optical transceiver adapted for optical signal reception and transmission.

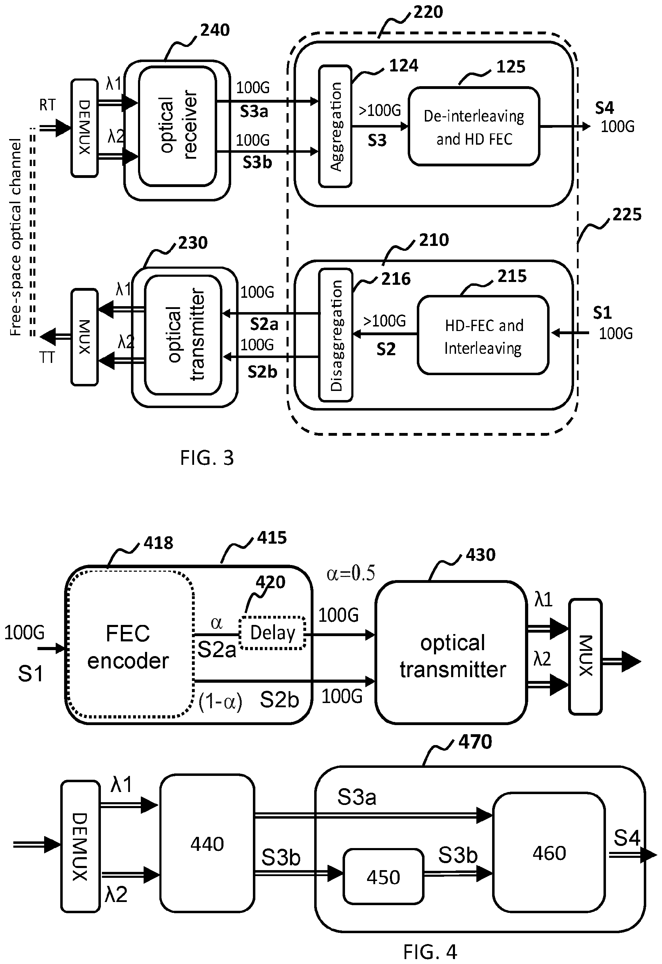

FIG. 3 shows a transmission system according to a third embodiment.

This third embodiment is similar to the second embodiment, except that spectral diversity is used to transmit the disaggregated interleaved data of the encoded streams of PDUs.

In the third embodiment, the two or more encoded streams of PDUs obtained by a disaggregation block are transmitted using respective wavelengths (e.g. using a WDM system including a multiplexer and a demultiplexer at the transmitter and the receiver respectively). The advantage of this embodiment is that the wavelengths could be amplified separately leading to higher achievable throughput power without being significantly impacted by the non-linearities of the high-power amplifier.

FIG. 4 shows a transmission system according to a fourth embodiment.

In the fourth embodiment, at transmission side, the encoding DSP 415 includes A FEC encoder 418 and an additional delay 420. The encoder 418 may be a FEC encoder for correction of erasure-type errors, for example a long block encoder (e.g. BCH encoder, Bose-ChaudhuriHocquenghem). This fourth embodiment allows to reduce the complexity of long interleaving and the encoded streams may be transmitted using spectral diversity.

In this fourth embodiment, the interleaving with FEC encoding is done by the encoder block 418. Compared to the embodiments like those of FIGS. 1 to 3 without the additional delay 420, the encoder block 418 encodes an original stream S1 of PDUs by applying a shorter interleaver delay (e.g. a delay in the order of few microseconds instead of a few milliseconds) and the encoded stream S2 of PDU is divided into two encoded streams S2a, S2b of PDU with a ratio of alpha as shown in FIG. 4, the two encoded streams S2a, S2b are transmitted to the optical transmitter 430. This ratio may be chosen to be close to 0.5. Further the delay 420 is applied to one of the encoded streams S2a, S2b of PDU to safeguard the data against potential fadings due to atmospheric turbulences. The two encoded streams S2a, S2b of PDU could be transmitted by the optical transmitter 430 using spectral diversity, i.e., using two wavelengths similar to the third embodiment of FIG. 3.

At receiver side, the transmission system includes an optical receiver 440 receiving the transmitted optical signal at the two wavelengths and generating corresponding streams S3a, S3b of PDUs from the received optical signal. A decoding DSP 470 includes a delay 450 (corresponding in length to the delay 420) that is applied to the one of the streams S3a, S3b of PDUs so as to temporally align the two streams S3a, S3b. Once temporally aligned, the streams S3a, S3b are merged in a single stream S3 of PDUS that is decoded, by de-interleaving and FEC decoding by block 460 of DSP 470 to generate a decoded stream S4 of PDUs.

The encoding DSP 415 may be implemented as an add-on card adapted to be plugged to the optical transmitter 430 or may be integrated in an optical transmitter device including the optical transmitter 430.

Likewise, the decoding DSP 470 may be implemented as an add-on card adapted to be plugged to an optical receiver 440 or may be integrated in an optical receiver device including the optical receiver 440.

Like for the embodiments of FIGS. 1 to 3, the two DSPs 415 and 470 may be implemented as separate add-on cards or be part of a single add-on card (e.g., a codec device, not represented) adapted to be plugged to an optical transceiver including the optical transmitter 230 and the optical receiver 240.

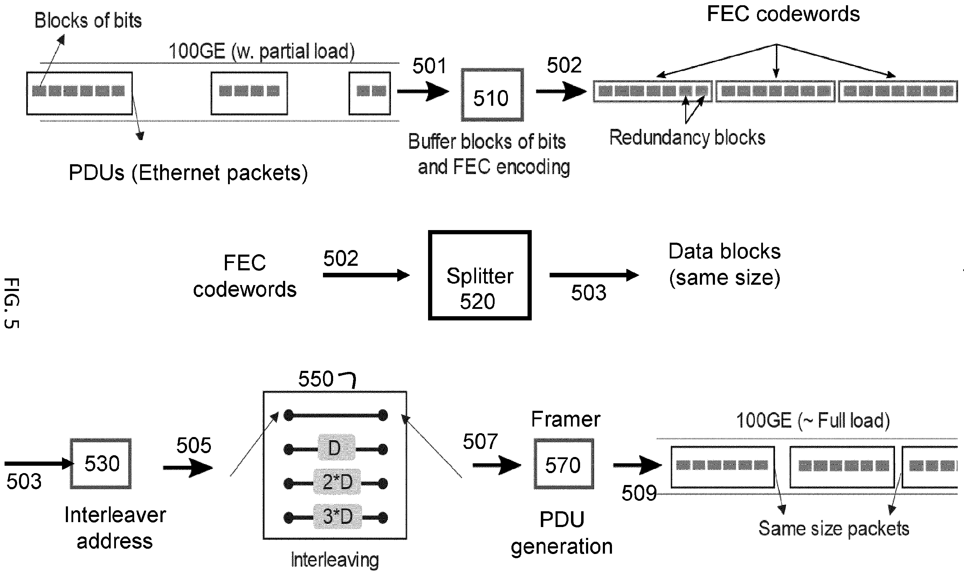

FIG. 5 shows functional blocks of an encoding DSP according to an example.

This example may be combined with any embodiment disclosed by reference to FIGS. 1 to 4.

The functional blocks correspond to processing steps that may be performed by an encoding DSP to encode an original stream 501 of PDUs into one or more encoded streams 509 of PDUs by forward error correction encoding and interleaving.

The PDUs of the original stream 501 and the encoded stream(s) 509 are frames or packets in a layer higher than the physical layer of an Open Systems Interconnection (OSI) model. The PDUs of the original stream 501 and the PDUs of the encoded streams 509 may be frames or packets in a same layer of the OSI model. The layer higher than the physical layer may, for example, be data link layer or a network layer. The PDUs of the original stream 501 and the encoded stream(s) 509 may be one of the following: Ethernet frames; Optical Transport Network (OTN) packets; Internet Protocol (IP) packets. The PDUs of the original stream 501 may differ in size.

The Open Systems Interconnection model (OSI model) is a conceptual model defined by the International Organization for Standardization (ISO) that provides a common basis for the coordination of standards development for the purpose of systems interconnection. The basis model is defined in ISO/IEC 7498-1. The OSI model consists of seven layers, the lower layer being the physical layer with six other layers above the physical layer. These layers may be defined as follows:
- the physical layer, for transmission and reception of raw bit streams over a physical medium;
- the data-link layer, for transmission of data frames between two nodes connected by a physical layer;
- the network layer, for structuring and managing a multi-node network, including addressing, routing and traffic control functionalities;
- the transport layer, for transmission of data segments between points on a network, including segmentation, acknowledgement and multiplexing functionalities;
- the session layer, for managing communication sessions, i.e., continuous exchange of information in the form of multiple back-and-forth transmissions between two nodes;
- the presentation layer, for translation of data between a networking service and an application; including character encoding, data compression and encryption/decryption functionalities;
- the application layer: for implementing high-level protocols such as for resource sharing or remote file access, e.g., HTTP.

The encoding DSP may include a buffer where different blocks of bits of same size are extracted from the original stream 501 and then encoded using a FEC encoder 510 to generate a stream 502 of FEC codewords. Each FEC codeword includes bits extracted from the original stream of PDUs and one or more redundancy block(s) of bits (i.e. a plurality of redundant bits). In general, the FEC codewords are same size codewords. The FEC encoder may be implement FEC encoding for correction of erasure-type errors.

The encoding DSP may include a splitter 520 configured to split the stream 502 of FEC codewords into one or more streams 503 of data blocks.

The encoding DSP may include an address block 530 configured to add an interleaver address to each data block of each stream 503 of data blocks to generate an input stream 505 of data blocks with interleaver address for the interleaver. The interleaver address may be stored in an interleaver header that is added to each data block.

The interleaver address may be FEC-encoded by applying an additional FEC encoding (thereby generating additional redundancy bits for the data blocks with interleaver header) after assignment of the interleaver addresses to the data blocks of the stream 503 of data blocks. In addition, the interleaver address is appended with a particular sequence (e.g., CAZAC) to facilitate the detection and synchronization of the position of the address at the receiver.

The encoding DSP may include one or more interleavers 550, each interleaver being configured to generate an interleaved stream 507 of data blocks from an input stream 505 of data blocks. The interleaver address inserted in a given data block may be used to define where the given data block is stored in the memory of the interleaver. The interleaver(s) 550 may apply any interleaving scheme. The interleaver(s) 550 may use convolutional interleaving.

The encoding DSP may include one or more framers 570. A framer is also referred to herein as a PDU generator or wrapper and is a data processing component configured to generate a stream of PDUs from one or more streams of data blocks.

In the example of FIG. 5, each framer 570 is configured to generate an encoded stream 509 of PDUs from one or more interleaved streams 507 of data blocks. One or more data blocks may for example be encapsulated into an Ethernet packet. For better performance one could consider same size PDUs at the output of the framer.

In embodiments, each PDU of the encoded stream(s) 509 comprises one or more data blocks of one or more interleaved streams 507 of data blocks. In embodiments, multiple interleaved streams 507 of data blocks are converted into multiple encoded streams of PDUs. In other embodiments, multiple interleaved streams 507 of data blocks are converted into a single stream 509 of PDUs.

At the output of the encoding DSP, each PDU of the encoded streams 509 may comprise control information and payload data. The payload data may comprise a forward error correction (FEC) codeword and at least one interleaver address. Each interleaver address is an interleaver address inserted by address block 530 in a data block, of one or more interleaved streams 507 of data blocks, that is, after interleaving, included in a PDU of an encoded stream.

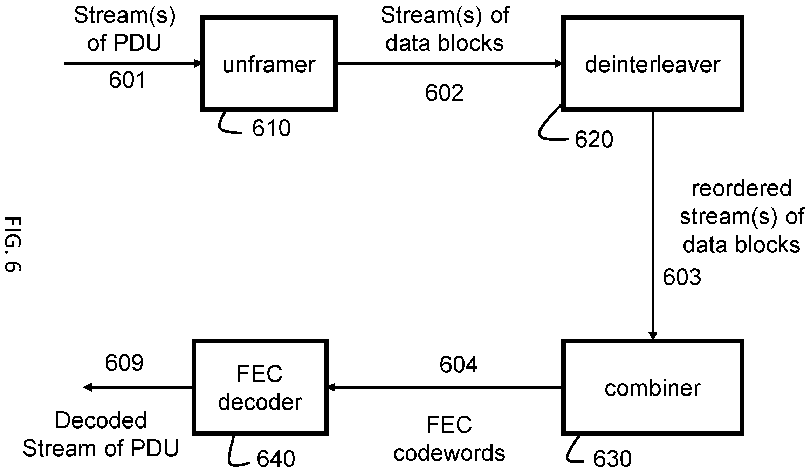

FIG. 6 shows functional blocks of a decoding DSP according to an example.

This example may be combined to any embodiment disclosed by reference to FIGS. 1 to 5.

The functional blocks correspond to processing steps that may be performed by a decoding DSP to decode one or more encoded streams 601 of PDUs to generate an output stream 609 of PDUs by forward error correction decoding and de-interleaving. The decoding DSP includes functional blocks corresponding to those of the encoding DSP described by reference to FIG. 5, but in reverse order and for reverse functions.

The decoding DSP may include one or more unframers 610. An unframer is also referred to herein as an unwrapper and is a data processing component configured to generate a stream of data blocks from a stream of PDUs. An unframer 610 may be configured to generate an interleaved stream of data blocks from a stream 601 of PDUs, by extracting one or more data blocks from each PDU of at least some PDUs of the one or more streams 601 of PDUs. The unframer 610 performs a function that is the reverse of that performed by the framer 570 of FIG. 5.

The decoding DSP may include one or more de-interleavers 620 configured to generate one or more re-ordered streams 603 of data blocks from the one or more streams 602 of data blocks. Each de-interleaver may be configured to generate a re-ordered stream 603 of data blocks from a stream 602 of data blocks. Each de-interleaver is configured to apply a de-interleaving scheme that corresponds to the interleaving scheme used at encoding stage so as to get back the data blocks order in the stream 505 or 507 of data blocks (see FIG. 5) at encoding stage before interleaving: this can be achieved for example based on the interleaver addresses added by block 530 to the data blocks at encoding stage.

The decoding DSP may include a combiner 630 (also referred to as the merger) configured to combine the one or more streams of data blocks into a stream 604 of FEC codewords. The combiner or merger 630 performs a function that is the reverse of that of the splitter 520 of FIG. 5. The size of the FEC codewords 502 at encoding stage is thereby restored.

The decoding DSP may include a FEC decoder 640 configured to generate the decoded stream 609 of PDUs by FEC decoding of the stream 604 of FEC codewords. Ideally, if all transmission errors have been corrected, the decoded stream 604 of PDUs is an exact replica of the original stream 501 of PDUs encoded by the encoding DSP on transmission side (see FIG. 5).

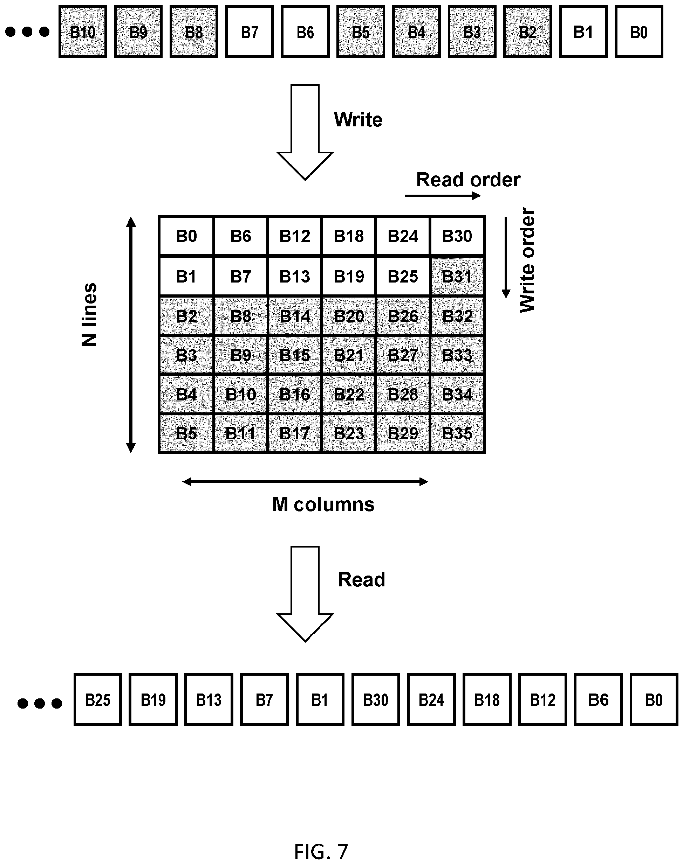

FIG. 7 illustrates an interleaving scheme according to a simplified example belonging to type called block interleaver.

In this example, an input sequence of data blocks numbered B0 to B35 is received by an interleaver and written to the memory of the interleaver according to the write order (here column by column), the first column being filed in with data blocks B0 to B5, the second column being filed in with data blocks B6 to B11, etc.

The interleaved sequence is obtained by reading the data blocks from the memory of the interleaver according to the read order (here line by line) such that the interleaver generates a reordered sequence of data blocks including successively:
- B0, B6, B12, B18, B24, B30 by reading the first line; then
- B1, B7, B13, B19, B25, B31 by reading the second line;
- etc.

Generally, an input stream of data blocks to be interleaved may be divided into successive temporal portions, each temporal portion corresponding to an input sequence of data blocks. In the example of FIG. 5, an input sequence of data blocks corresponds to a temporal portion (also referred to herein as a substream) of the input stream 505 of data blocks.

The interleaving scheme is applied once to each temporal portion (i.e., to each input sequence of data blocks) of the input stream. Each interleaver is configured to generate an interleaved sequence (i.e., substream) of data blocks by interleaving an input sequence (i.e., substream) of data blocks with each other. In other words, each interleaver is configured to re-order the data blocks of the input sequence (i.e., substream) of data blocks.

The interleaver scheme is configured so as to introduce a delay of at least 10 milliseconds between two successive data blocks. That is to say, by reordering an input sequence of data blocks, two successive data blocks (for example between blocks B0 and B1 in FIG. 7) of the input sequence of data blocks are, in the reordered sequence, separated from each other in time by a period of at least 10 milliseconds.

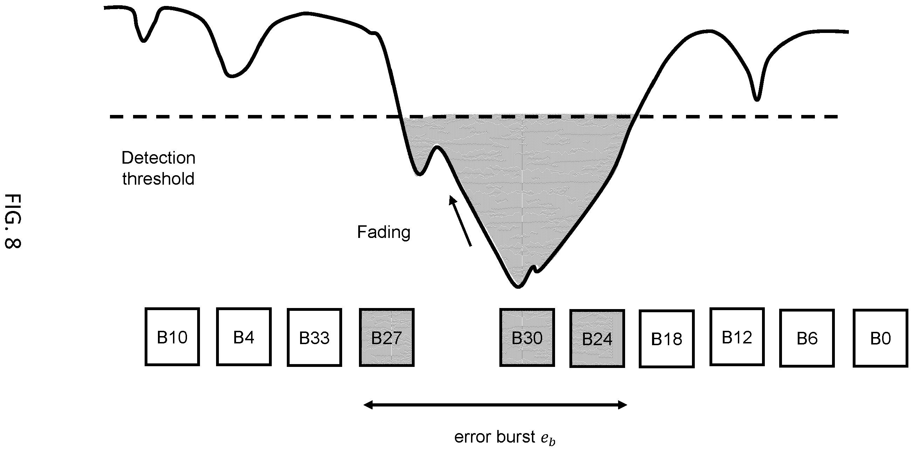

FIG. 8 illustrates the adjustment of the delay introduced by the interleaver according to a simplified example.

The maximum duration of an error burst *e_{b}* occurring due to atmospheric turbulence may be converted to a number of data packets that may be affected by the atmospheric turbulence on the basis of the data rate of the encoded stream of PDU transmitted via free space.

The delay between two successive data blocks that is introduced by the interleaver may be adjusted on this basis. In the simplified interleaving scheme of FIG. 7, the delay introduced between blocks B0 and B1 correspond to N=6 data blocks, i.e. it corresponds to a number N of lines in the buffer of the interleaver.

For more complex interleaving schemes, the parameters (e.g. length) of interleaving scheme may also be adjusted dynamically on the basis of an estimated duration (minimum, average or maximum duration) of interruption due atmospheric turbulence. In this scenario, the interleaver length is also sent along with the address in order to either reduce the duration if the turbulence conditions become favorable by reducing the latency for the clients or increase the duration to reduce any packet interruptions at the cost of higher latency.

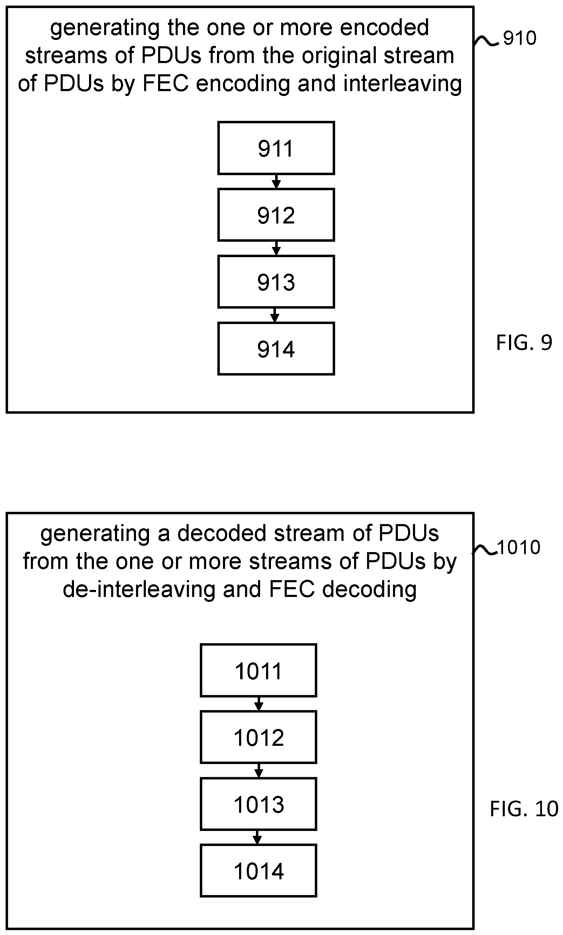

FIG. 9 shows a flowchart of a method for encoding an original stream of protocol data units (PDUs) into one or more encoded streams of PDUs to be transmitted via a free space optical link according to one or more example embodiments. The steps of the method may be implemented by an encoding device, e.g., an encoding DSP according to any example described herein.

The method includes a step 910 of generating the one or more encoded streams of PDUs from the original stream of PDUs by FEC encoding and interleaving. The FEC encoding may be FEC encoding for correction of erasure-type errors.

Generating the one or more encoded streams of PDUs may include:
- generating (911) a stream of FEC codewords by FEC encoding of the original stream of PDUs;
- extracting (912) from the stream of FEC codewords one or more streams of data blocks;
- generating (913) one or more reordered streams of data blocks from the one or more streams of data blocks by one or more interleavers; and
- generating (914) the one or more encoded streams of PDUs from the one or more reordered streams of data blocks, each PDU of the one or more encoded streams of PDUs comprising one or more data blocks of the one or more reordered streams of data blocks.

The one or more encoded streams of PDUs may be provided respectively to one or more output ports of the decoding DSP, the one or more output ports are connected or connectable to an optical transmitter.

A reordered stream of data blocks may be generated from a stream of data blocks by interleaving a plurality of substreams of the stream of data blocks with each other, thereby separating two or more successive data blocks of a substream of data blocks from each other in time by a period of at least 10 milliseconds.

Interleaving the plurality of substreams with each other may comprises: adding an interleaver address to each data block of each substream of the plurality of substreams. The interleaver address may be FEC-encoded.

The PDUs of the original stream and the PDUs of the one or more encoded streams of PDUs may be frames or packets in a layer higher than the physical layer of the OSI model.

The PDUs of the original stream of PDUs and the PDUs of the one or more encoded streams of PDUs may be one of the following:
- Ethernet frames;
- Optical Transport Network (OTN) packets; or
- Internet Protocol (IP) packets.

The PDUs of the original stream of PDUs and the PDUs of the one or more encoded streams of PDUs may be implemented in a same layer of an OSI model.

Each PDU of the one or more encoded streams of PDUs may comprise control information and payload data, wherein the payload data comprises a FEC codeword and at least one interleaver address.

Each FEC codeword of the stream of FEC codewords may comprise bits extracted from the original stream of PDUs and a plurality of redundant bits.

FIG. 10 shows a flowchart of a method for generating a decoded stream of PDUs according to one or more example embodiments. The steps of the method may be implemented by a decoding device, e.g. a decoding DSP according to any example described herein.

The method includes a step 1010 of generating a decoded stream of PDUs from the one or more streams of PDUs by de-interleaving and FEC decoding.

Generating a decoded stream of PDUs may include:
- generating (1011) one or more reordered streams of data blocks from the one or more streams of PDUs, by extracting one or more data blocks from each PDU of at least some PDUs of the one or more streams of PDUs;
- de-interleaving (1012) the one or more reordered streams of data blocks to generate one or more streams of data blocks;
- combining (1013) the one or more streams of data blocks into a stream of FEC codewords; and
- generate (1014) the decoded stream of PDUs by FEC decoding of the stream of FEC codewords.

The one or more streams of PDUs may be received respectively via one or more input ports of the decoding DSP, wherein the one or more input ports are connected or connectable to an optical receiver.

It should be appreciated by those skilled in the art that any functions, engines, block diagrams, flow diagrams, state transition diagrams, flowchart and / or data structures described herein represent conceptual views of illustrative circuitry.

While the steps may be described herein in a sequential manner, the person skilled in the art will appreciate that some steps may be omitted, combined, performed in different order and / or in parallel.

Each described function, engine, block, step described herein may be implemented in hardware, software, firmware, middleware, microcode, or any suitable combination thereof.

When implemented in software, firmware, middleware or microcode, instructions to perform the necessary tasks may be stored in a computer readable medium. A computer readable medium or computer readable storage medium may be any tangible storage medium suitable for storing instructions readable by a processor.

The instructions may be configured to cause an apparatus to perform one or more functions disclosed herein for an encoding DSP and / or a decoding DSP and / or an optical receiver device and / or an optical transmitter device. The means may include at least one processor and at least one memory storing instructions that, when executed by the at least one processor, cause the apparatus to perform the one or more functions. The means may include circuitry (e.g. processing circuitry) to perform the one or more functions. Additionally, the processor, memory and instructions, serve as means for providing or causing performance by the apparatus of the one or more functions.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems, and methods without departing from the scope of what is disclosed. Such embodiments should be understood to fall within the scope of the present disclosure as determined based upon the claims and any equivalents thereof.

### LIST OF MAIN ABBREVIATIONS

- CAZAC: Constant Amplitude Zero AutoCorrelation
- DEMUX: Demultiplexer
- DSP: Digital Signal Processing
- FEC: Forward Error Correction
- GMP: Generic Mapping Procedure
- MUX: Multiplexer
- PDU: Protocol Data Units
- RT: Receiver Telescope
- TT: Transmitter Telescope
- WDM: Wavelength Division Multiplexed

## Claims

1. A digital signal processor (DSP) for encoding an original stream of protocol data units (PDUs) into one or more encoded streams of PDUs to be transmitted via a free space optical link, wherein the DSP is configured to generate the one or more encoded streams of PDUs from the original stream of PDUs by forward error correction (FEC) encoding and interleaving.

2. The DSP of claim 1, wherein the DSP comprises:
a FEC encoder configured to generate a stream of FEC codewords by FEC encoding of the original stream of PDUs;
a splitter configured to split the stream of FEC codewords into one or more streams of data blocks;
one or more interleavers configured to generate one or more reordered streams of data blocks from the one or more streams of data blocks; and
one or more framers configured to generate the one or more encoded streams of PDUs from the one or more reordered streams of data blocks, each PDU of the one or more encoded streams of PDUs comprising one or more data blocks of the one or more reordered streams of data blocks.

3. The DSP of claim 2, wherein each of the one or more interleavers is configured to generate a reordered stream of data blocks from a stream of data blocks by interleaving a plurality of substreams of the stream of data blocks with each other, thereby separating two or more successive data blocks of a substream of data blocks from each other in time by a period of at least 10 milliseconds.

4. The DSP of claim 3, wherein interleaving the plurality of substreams with each other comprises:
adding an interleaver address to each data block of each substream of the plurality of substreams.

5. The DSP of claim 4, wherein the interleaver address is FEC-encoded.

6. The DSP of claim 1, wherein the PDUs of the original stream and the PDUs of the one or more encoded streams of PDUs are frames or packets in a layer higher than the physical layer of an Open Systems Interconnection (OSI) model.

7. The DSP of claim 1, wherein the PDUs of the original stream of PDUs and the PDUs of the one or more encoded streams of PDUs are one of the following:
Ethernet frames;
Optical Transport Network (OTN) packets; or
Internet Protocol (IP) packets.

8. The DSP of claim 1, wherein the PDUs of the original stream of PDUs and the PDUs of the one or more encoded streams of PDUs are implemented in a same layer of an Open Systems Interconnection (OSI) model.

9. The DSP of claim 1, wherein each PDU of the one or more encoded streams of PDUs comprises control information and payload data, wherein the payload data comprises a forward error correction (FEC) codeword and at least one interleaver address.

10. The DSP of claim 2, wherein each FEC codeword of the stream of FEC codewords comprises:
bits extracted from the original stream of PDUs and
a plurality of redundant bits.

11. The DSP of claim 2, wherein the FEC encoding comprises FEC encoding for correction of erasure-type errors.

12. The DSP of claim 1, comprising one or more output ports for providing the one or more encoded streams of PDUs, wherein the one or more output ports are connected or connectable to an optical transmitter.

13. An optical transmitter device, comprising the DSP of claim 1, a physical layer interface, and an optical transmitter,
wherein the physical layer interface is configured to generate, from each respective stream of the one or more encoded streams of PDUs, a respective stream of symbols and to drive the optical transmitter in accordance with the stream of symbols.

14. The optical transmitter device of claim 13, wherein generating the respective stream of symbols comprises adding forward error correction information at the physical layer.

15. A digital signal processor (DSP) for decoding one or more streams of protocol data units (PDUs) received via a free space optical link into a decoded stream of PDUs,
wherein the DSP is configured to generate the decoded stream of PDUs from the one or more streams of PDUs by de-interleaving and forward error correction (FEC) decoding.

16. The DSP of claim 15, comprising:
one or more unframers configured to generate one or more reordered streams of data blocks from the one or more streams of PDUs, by extracting one or more data blocks from each PDU of at least some PDUs of the one or more streams of PDUs;
one or more de-interleavers configured to generate one or more streams of data blocks from the one or more reordered streams of data blocks;
a combiner configured to combine the one or more streams of data blocks into a stream of FEC codewords; and
an FEC decoder configured to generate the decoded stream of PDUs by FEC decoding of the stream of FEC codewords.

17. The DSP of claim 16, comprising one or more input ports for receiving the one or more streams of PDUs, wherein the one or more input ports are connected or connectable to an optical receiver.

18. A codec device for free space optical communication, the codec device comprising the DSP of any of claims 1 to 14 and the DSP of any of claims 15 to 17.
